# EUROPEAN PATENT APPLICATION

(11) **EP 4 064 155 A1**
(43) Date of publication of application: **28.09.2022**
(21) Application number: 21191045.0
(22) Date of filing: 12.08.2021
(51) Int. Cl.: G06Q 10/06

(54) **INFORMATION PROCESSING APPARATUS, INFORMATION PROCESSING PROGRAM AND METHOD FOR INFORMATION PROCESSING**

(30) Priority: 25.03.2021 JP 2021052195
(71) Applicant: Fujifilm Business Innovation Corp., Tokyo 107-0052 (JP)
(72) Inventor: OHTAKE, Yu, Kanagawa, 220-8668 (JP)
(74) Representative: Parker, Andrew James

(57) **Abstract**

An information processing apparatus includes: a processor configured to, when storing a work result of a first person in charge that is in charge of a first work in a workflow in a storage location, determine the storage location in accordance with a work environment of a second person in charge that is in charge of a second work following the first work in the workflow.

## Description

### Background

### Technical Field

The present invention relates to an information processing apparatus, an information processing program, and a method for information processing.

### Related Art

Patent Literature 1 has an object of automatically assigning a work of a person in charge to another person in charge in a case where the person in charge of the work in the workflow is absent due to an unscheduled sudden business trip or the like, in a workflow system in which a work is processed by each person in charge according to a defined task flow, and discloses that, in a workflow system including a server and plural clients, the client automatically detects a presence status of a person in charge, and notifies the server of information on the presence status, and the server periodically checks the information on the presence status, determines whether there is an absent person in charge based on the information, determines whether there is a work assigned to the absent person in charge in a case where there is the absent person in charge, and assigns the work to another person in charge in a case where there is the work assigned to the absent person in charge.

Patent Literature 2 discloses a workflow management apparatus using a facsimile apparatus. The workflow management apparatus is provided with a management unit for managing a processing for a facsimile received document as a workflow. The management unit is provided with a unit for storing one person in charge, allowing the person in charge to access the received document, in a case where the person in charge takes over the work to a new person in charge, storing the new person in charge and allowing the new person in charge to access the received document, storing a processing deadline for each workflow, and warning in a case where processing for the received document has not been performed within the processing deadline, and a unit for providing a folder for each person in charge, putting the received document into a folder of the person in charge, monitoring whether the received document has been read from the folder of the person in charge, and notifying a person in charge in a case where the received document has not been read within predetermined time. Further, the warning unit includes a unit for storing the presence or absence of security for each received document, and printing the warning and the received document with a facsimile apparatus if security is not set in the received document, and a unit for sending the warning to the person in charge if the security is set in the received document, and printing the received document with the facsimile apparatus if there is an input of a password of the person in charge.

### Citation List

### Patent Literature

Patent Literature 1: JP-A-2002-169941
Patent Literature 2: Japanese Patent No. 3736758

### Summary

When the work result by the person in charge in the workflow is stored in the storage location, if the work result is uniformly stored in a predetermined storage location, it may take time to take out the work result from the storage location in the next work. Accordingly, an object of the present invention is to provide an information processing apparatus, an information processing program and a method for information processing, capable of shortening time for taking out a work result from a storage location when the work result by a person in charge in a workflow is stored in the storage location, as compared with a case where the work result is uniformly stored in a predetermined storage location.

According to a first aspect of the present invention, there is provided an information processing apparatus including a processor configured to, when storing a work result of a first person in charge that is in charge of a first work in a workflow in a storage location, determine the storage location in accordance with a work environment of a second person in charge that is in charge of a second work following the first work in the workflow.

According to a second aspect of the present invention, there is provided the information processing apparatus according to the first aspect, wherein the processor is configured to perform processing the work result to be stored in accordance with the storage location.

According to a third aspect of the present invention, there is provided the information processing apparatus according to the second aspect, wherein the processor is configured to, in a case where the storage location is a storage location outside an organization to which the second person in charge belongs, perform processing the work result of the second person in charge in accordance with the storage location, a capacity of the storage location, or a capacity of the work result.

According to a fourth aspect of the present invention, there is provided the information processing apparatus according to the first aspect, wherein the processor is configured to: acquire a schedule of the second person in charge; extract a work environment at a date and time at which the second person in charge performs the second work; and determine the storage location in accordance with the extracted work environment.

According to a fifth aspect of the present invention, there is provided the information processing apparatus according to the fourth aspect, wherein the processor is configured to, in a case where time for storing the work result of the first person in charge in the storage location has exceeded predetermined time, extract a date and time after a next day of the predetermined time from the schedule of the second person in charge as the date and time at which the second person in charge performs the second work.

According to a sixth aspect of the present invention, there is provided the information processing apparatus according to the first aspect, wherein the processor is configured to, in a case where the first work is not completed and a work in process of the first person in charge is stored in the storage location, determine the storage location in accordance with a work environment of the first person in charge at a date and time at which the first person in charge resumes the first work next.

According to a seventh aspect of the present invention, there is provided the information processing apparatus according to the sixth aspect, wherein the processor is configured to, in a case where a work environment of the first person in charge when the work in process is stored in the storage location is outside an organization to which the first person in charge belongs and a work environment of the first person in charge at the date and time at which the first person in charge resumes the first work next is in the organization of the first person in charge, set the storage location as a storage location used outside the organization.

According to an eighth aspect of the present invention, there is provided the information processing apparatus according to the first aspect, wherein the processor is configured to: after the work result is stored in the storage location, confirm the work environment of the second person in charge; and in a case where there is a change in the work environment, store the work result in a storage location in accordance with a changed work environment.

According to a ninth aspect of the present invention, there is provided the information processing apparatus according to the first aspect, wherein the processor is configured to, in a case where plural second persons are in charge of the second work, determine the storage location in accordance with the work environments of the plurality of the second persons in charge according to a predetermined rule.

According to a tenth aspect of the present invention, there is provided the information processing apparatus according to the ninth aspect, wherein the processor is configured to, in a case where the work environments of the second persons in charge include outside of an organization of the first person in charge, determine the storage location as a storage location outside the organization as the rule.

According to an eleventh aspect of the present invention, there is provided an information processing program that causes a processor of a computer including a processor to execute a process including: when storing a work result of a first person in charge that is in charge of a first work in a workflow in a storage location, determining the storage location in accordance with a work environment of a second person in charge that is in charge of a second work following the first work in the workflow.

According to a twelfth aspect of the present invention, there is provided a method for information processing including: when storing a work result of a first person in charge that is in charge of a first work in a workflow in a storage location, determining the storage location in accordance with a work environment of a second person in charge that is in charge of a second work following the first work in the workflow.

According to the information processing apparatus of the first aspect, when the work result by the person in charge in the workflow is stored in the storage location, it is possible to shorten time for taking out the work result from the storage location as compared with a case where the work result is uniformly stored in a predetermined storage location.

According to the information processing apparatus of the second aspect, it is possible to perform the processing in accordance with the storage location on the work result.

According to the information processing apparatus of the third aspect, in the case where the storage location of the work result is the storage location outside the organization to which the second person in charge belongs, it is possible to perform processing according to the storage location, the capacity of the storage location, or the capacity of the work result.

According to the information processing apparatus of the fourth aspect, the storage location can be determined in accordance with the work environment at the date and time at which the second person in charge performs the second work.

According to the information processing apparatus of the fifth aspect, in the case where the time for storing the work result in the storage location has exceed the predetermined time, the date and time after the next day can be set as the date and time at which the second person in charge performs the second work.

According to the information processing apparatus of the sixth aspect, in the case where the work in process is stored in the storage location, the storage location can be determined in accordance with the work environment of the first person in charge at the date and time at which the first person in charge performs the first work next.

According to the information processing apparatus of the seventh aspect, in the case where the storage location of the work in process is outside the organization and the work environment for continuation is in the organization, the storage location of the work in process can be set outside the organization.

According to the information processing apparatus of the eighth aspect, in the case where there is the change in the work environment of the second person in charge, the work result can be stored in the storage location in accordance with the changed work environment.

According to the information processing apparatus of the ninth aspect, in the case where there are the plurality of second persons in charge, the storage location can be determined according to the predetermined rule.

According to the information processing apparatus of the tenth aspect, in the case where the work environment of the second person in charge includes the outside of the organization, the storage location can be determined to be outside of the organization.

According to the information processing program of the eleventh aspect, when the work result by the person in charge in the workflow is stored in the storage location, it is possible to shorten the time for taking out the work result from the storage location as compared with a case where the work result is uniformly stored in a predetermined storage location.

According to method of a twelfth aspect, when the work result by the person in charge in the workflow is stored in the storage location, it is possible to shorten the time for taking out the work result from the storage location as compared with a case where the work result is uniformly stored in a predetermined storage location.

### Brief Description of the Drawings

Exemplary embodiment(s) of the present invention will be described in detail based on the following figures, wherein:
Fig. 1 is a conceptual module configuration diagram for a configuration example according to an exemplary embodiment;
Fig. 2 is an explanatory diagram illustrating a system configuration example using the present exemplary embodiment;
Fig. 3 is a specific module configuration diagram for a configuration example according to the present exemplary embodiment;
Fig. 4 is an explanatory diagram illustrating a data structure example of a storage location management table;
Fig. 5 is an explanatory diagram illustrating a data structure example of a person-in-charge management table;
Fig. 6 is an explanatory diagram illustrating a data structure example of a schedule management table;
Fig. 7 is a flowchart illustrating a processing example according to the present exemplary embodiment;
Fig. 8 is a flowchart illustrating a processing example according to the present exemplary embodiment;
Fig. 9 is a flowchart illustrating a processing example according to the present exemplary embodiment;
Fig. 10 is a flowchart illustrating a processing example according to the present exemplary embodiment;
Fig. 11 is a flowchart illustrating a processing example according to the present exemplary embodiment;
Fig. 12 is a flowchart illustrating a processing example according to the present exemplary embodiment; and
Fig. 13 is a flowchart illustrating a processing example according to the present exemplary embodiment.

### Detailed Description

Hereinafter, an exemplary embodiment for realizing the present invention will be described with reference to the drawings.

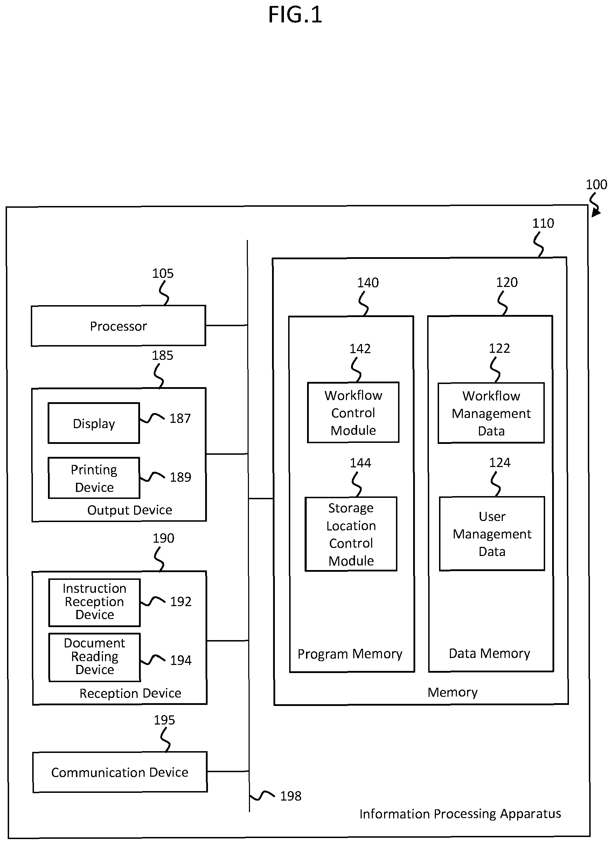

Fig. 1 illustrates a conceptual module configuration diagram for a configuration example according to an exemplary embodiment.

The term "module" generally refers to a logically separable component such as software (including a computer program as an interpretation of "software"), hardware, or the like. Therefore, the module in the present exemplary embodiment refers to not only a module in a computer program but also a module in a hardware configuration. Therefore, the exemplary embodiment also serves as a description of a computer program (for example, a program for causing a computer to execute each procedure, a program for causing a computer to function as each unit, a program for causing a computer to realize each function), a system, and a method for functioning these modules. However, although terms "store" and "stored" and equivalents thereof are used for the sake of convenience of description, these terms mean that being stored in a storage device or controlled to be stored in a storage device when the exemplary embodiment is a computer program. In implementation, modules may have a one-to-one correspondence with functions, in the implementation, one module may be configured by one program, plural modules may be configured by one program, and conversely, one module may be configured by plural programs. In addition, the plural modules may be executed by one computer, or one module may be executed by plural computers in a distributed or parallel environment. One module may include another module. Hereinafter, the term "connection" is used not only for physical connection but also for logical connections (for example, transmission and reception of data, instruction, reference relationship between data, login, or the like). The term "predetermined" means determined prior to target processing, and includes a meaning of being determined according to a situation or a state at that time or according to the situation or the state up to that time even after the processing according to the present exemplary embodiment starts, as a matter of course, before the processing according to the exemplary embodiment starts. When there are plural "predetermined values", the values may be different from each other, or two or more values ("two or more values" may include, of course, all values) may be the same. In addition, a description of "when A, do B" is used in a meaning of "determine whether it is A, do B when it is determined to be A". However, a case where it is not necessary to determine whether it is A is excluded. In addition, when a thing is listed such as "A, B, and C", "A, B, and C" are only examples unless otherwise specified, and include a case where only one of them is selected (for example, only A).

In addition, the system or the apparatus may be configured by connecting plural computers, hardware, apparatuses, and the like by a communication unit such as a network ("network" including a one-to-one communication connection), and further may be realized by a single computer, hardware, an apparatus, or the like. The terms "apparatus" and "system" are used as terms having the same meaning. Of course, the "system" does not include anything that is nothing more than a social "mechanism" (that is, a social system) that is an artificial agreement.

In addition, target information is read from the storage device for each processing by each module or for each processing when plural processing is performed in the module, and after the processing is performed, a processing result is written to the storage device. Therefore, description of the reading from the storage device before the processing and the writing to the storage device after the processing may be omitted.

An information processing apparatus 100 according to the present exemplary embodiment has a function of performing work management of a workflow. In particular, the information processing apparatus 100 has a function of determining a storage location of a work result in each work. Here, the term "workflow" is a system or a service in which a flow of a task is defined and is configured by plural tasks, and an order of the work and a person in charge who performs each work are predetermined.

As illustrated in an example of Fig. 1, the information processing apparatus 100 includes at least a processor 105 and a memory 110, and is configured by a bus 198 for connecting the processor and the memory and exchanging data. In addition, the information processing apparatus 100 may include an output device 185, a reception device 190, and a communication device 195. Data is exchanged between the processor 105, the memory 110, the output device 185, the reception device 190, and the communication device 195 via the bus 198.

Note that a block diagram illustrated in the example of Fig. 1 also illustrates an example of a hardware configuration of a computer that realizes the exemplary embodiment. The hardware configuration of the computer in which the program according to the exemplary embodiment is executed is a computer as illustrated in Fig. 1, and is specifically a computer or the like that can serve as a personal computer or a server. As a specific example, the processor 105 is used as a processing unit, and the memory 110 is used as a storage device.

The number of processors 105 may be one or more. The processor 105 includes, for example, a central processing unit (CPU), a microprocessor, or the like. When plural processors 105 are used, either a tightly coupled multiprocessor or a loosely coupled multiprocessor may be used. For example, plural processor cores may be mounted in one processor 105. Further, it is also possible to use a system in which plural computers are connected by a communication path to behave virtually like one computer. As a specific example, the loosely coupled multiprocessor may be configured as a cluster system or a computer cluster. The processor 105 executes a program in a program memory 140.

The memory 110 may include, for example, a semiconductor memory in the processor 105 such as a register or a cache memory, may be a main memory that is a main storage device including a random access memory (RAM) and a read only memory (ROM), or the like, an internal storage device such as a hard disk drive (HDD) or a solid state drive (SSD) having a function as a permanent storage device, an external storage device or an auxiliary storage device such as a CD, a DVD, a Blu-ray (registered trademark) Disc, a USB memory, or a memory card, or may include a storage device such as a server connected via a communication line.

The memory 110 includes a data memory 120 for storing data and a program memory 140 for storing programs. Incidentally, the data memory 120 and the program memory 140 may store a program such as an OS for starting the computer, data such as a parameter appropriately changed in execution of the module, or the like, in addition to the information shown and the module program.

The output device 185 includes, for example, a display 187, a printing device 189, or the like. The display 187 such as a liquid crystal display, an organic EL display, a three-dimensional display, or a projector displays a processing result by the processor 105, data in the data memory 120, or the like as text, image information, or the like. The printing device 189, such as a printer or a multifunction device, prints the processing result by the processor 105, the data in the data memory 120, or the like. The output device 185 may include a speaker, an actuator for vibrating the device, or the like.

The reception device 190 includes, for example, an instruction reception device 192, a document reading device 194, or the like. The instruction reception device 192 such as a keyboard, a mouse, a microphone, or a camera (including a line-of-sight detection camera or the like) receives data based on an operation (including an operation, a voice, a line of sight, or the like) of a user with respect to the keyboard, the mouse, the microphone, the camera (including the line-of-sight detection camera or the like).

Further, a touch screen may be provided with both functions of the display 187 and the instruction reception device 192. In this case, with respect to realization of a function of the keyboard, even when there is no physical key, a keyboard (also called a software keyboard, a screen keyboard, or the like) may be drawn on the touch screen by software so as to realize the function of the keyboard.

The display 187 and the instruction reception device 192 are used as a user interface.

The document reading device 194 such as a scanner or a camera reads or photographs a document and receives the generated image data.

The communication device 195 is a communication line interface such as a network card for connecting to another device via a communication line.

In the exemplary embodiment, for a computer program, the computer program that is software is read into the program memory 140 of the hardware configuration, and software and the hardware resources cooperate with each other to realize the exemplary embodiment. That is, the present exemplary embodiment is specifically realized by using hardware resources (including at least the processor 105, the memory 110, and in some cases the output device 185, the reception device 190, and the communication device 195) by the information processing by software, and the law of nature is used as a whole.

Note that the hardware configuration illustrated in Fig. 1 illustrates one configuration example, and the present exemplary embodiment is not limited to the configuration illustrated in Fig. 1, but may be any configuration as long as the module described in the present exemplary embodiment can be executed. For example, as the processor 105, a graphics processing unit (GPU, including general-purpose computing on graphics processing units (GPGPU)) may be used, some of the modules may be executed by dedicated hardware (for example, an integrated circuit for a specific application (as a specific example, an application specific integrated circuit (ASIC) or the like) or a reconfigurable integrated circuit (as a specific example, a field-programmable gate array (FPGA) or the like)), some modules may be in an external system and connected by a communication line, and further, plural systems illustrated in Fig. 1 may be connected to each other by a communication line so as to cooperate with each other. In addition, particularly, in addition to a personal computer, the hardware may be incorporated into a portable information communication device (including a portable phone, a smartphone, a mobile device, a wearable computer, or the like), an information appliance, a robot, a copier, a fax machine, a scanner, a printer, a multifunction device (an image processing apparatus having two or more functions of a scanner, a printer, a copier, a fax machine, or the like), or the like.

The processor 105 is connected to the memory 110, the output device 185, the reception device 190, and the communication device 195 via the bus 198. The processor 105 executes processing according to a computer program describing an execution sequence of each module, which is a program in the program memory 140. For example, when an operation of the user is received by the instruction reception device 192, processing by a module corresponding to the operation in the program memory 140 is executed, the processing result is stored in the data memory 120, output to the display 187, or transmitted to another device by controlling the communication device 195.

The memory 110 includes the data memory 120 and the program memory 140, and is connected to the processor 105, the output device 185, the reception device 190, and the communication device 195 via the bus 198.

The data memory 120 stores workflow management data 122 and user management data 124.

The workflow management data 122 stores data for managing a workflow.

The user management data 124 stores data for managing a user who is a person in charge of the workflow. Here, the term "user" is a person who can be a person in charge of performing a work in the workflow.

The program memory 140 stores a workflow control module 142 and a storage location control module 144.

The workflow control module 142 performs work management of the workflow. For example, definition of the workflow, assignment of works to the person in charge and deadline management in accordance with a flow of the workflow, and the like are performed.

The storage location control module 144 determines the storage location of the work result in each work of the workflow.

When a work result by a first person in charge in charge of a first work in the workflow is stored in the storage location, the storage location control module 144 determines a storage location in accordance with a work environment of a second person in charge in charge of a second work performed after the first work. Incidentally, the first person in charge and the second person in charge may be the same person or different persons.

The work environment refers to a place where the person in charge performs a work, or a network environment at the place. The latter network environment corresponds to, for example, a server, a network, or the like that can be connected from a place where the person in charge performs the work.

For the specification of the work environment, for example, the work environment may be extracted from a schedule of the second person in charge.

It is determined whether the work environment is an organization to which the second person in charge belongs, and in a case where the work environment is in the organization, a storage location accessible only from the environment in the organization is set. In a case where the work environment is other than the organization, a storage location accessible from an environment outside the organization is set. The organization corresponds to, for example, a company, a business division, a place to go to work, or the like. The storage location in the organization corresponds to, for example, a server (including a database server or the like) managed by the company or the like. This corresponds to a so-called on-premises type information system. The outside of the organization corresponds to, for example, home, outing location, or the like. The storage location outside the organization corresponds to, for example, a file storage service provided by a cloud service. In the following, in a case of the specific example, a case where the second person in charge goes to the company and works is exemplified as "a case of the outside of the organization to which the second person in charge belongs", and a case where the second person in charge performs the work with a remote work (at home or the like) is exemplified as "a case of being not in the organization to which the second person in charge belongs".

The work result may be electronic data that can be electronically stored. For example, a document (also referred to as a file) is applicable. The document is text data, numerical data, graphic data, image data, moving image data, voice data, or a combination thereof, is a document that is subject to storage, editing, searching, or the like, can be stored as an individual unit between systems or users, and includes documents similar to these. Specifically, the document includes a document created by a document creation program (so-called word processing software), an image read by an image reading apparatus (scanner or the like), a Web page, and the like.

The storage location control module 144 may perform processing the work result to be stored in accordance with the storage location.

Here, the term "process in accordance with the storage location" includes, for example, file division, format conversion, compression, encryption, and the like. As a specific example of the file division, a subfolder may be created, and a file with a serial number may be stored in the subfolder.

Further, when the storage location is a storage location outside the organization to which the second person in charge belongs, the storage location control module 144 may perform processing according to the storage location, a capacity of the storage location, or a capacity of the work result. The process may be performed in accordance with any one of the storage location, the capacity of the storage location, the capacity of the work result, or a combination thereof. The capacity of the storage location may be the total capacity of the storage location or a remaining capacity.

The "processing in accordance with the storage location" may be processing in accordance with a data type permitted by the storage location. The processing here is, in particular, processing for converting a format of a file. For example, the processing may be conversion of the work result into PDF.

In a case where the storage location is a shared folder with another user, the work result may be encrypted. The determination as to whether or not the folder is a shared folder with the other user may be made based on whether the other user has an access right of an attribute (property) of the folder, which is the storage location.

As the "processing in accordance with the capacity of the storage location", the processing may be performed in a case where the capacity of the storage becomes equal to or less than a predetermined capacity. The processing here is processing for reducing a file capacity, and includes, for example, the file division, the compression, and the like. In a case where there is a relatively large margin in the capacity of the storage location, a compression rate may be reduced or the compression may not be performed from a viewpoint of not degrading a quality (for example, image quality or sound quality) of the file to be the work result.

As the "processing according to the capacity of the work result", the processing may be performed in a case where a data capacity of the work result to be stored becomes equal to or greater than a predetermined capacity. That is, the processing may be performed in a case where the maximum capacity of one file allowed by the storage location is exceeded. The processing here is processing for reducing a file capacity, and includes, for example, the file division, the compression, and the like.

In addition, for example, as the processing according to the capacity of the storage location and the capacity of the work result, if the capacity of the work result is stored, compression processing may be performed on the work result in a case where the remaining capacity of the storage location becomes equal to or less than a predetermined value.

The storage location control module 144 may acquire the schedule of the second person in charge, extract the work environment at a date and time when the second person in charge performs the second work, and determine the storage location in accordance with the extracted work environment.

Further, in a case where time for storing the work result in the storage location has exceeded predetermined time, the storage location control module 144 may extract the date and time after the next day from a schedule of the second person in charge as the date and time when the second person in charge performs the second work.

The term "predetermined time" may be, for example, leave time of the company. That is, in a case where the first work is completed, but the second worker has already leaved the company, the second worker performs the second work after the next day, not immediately after the end of the first work.

The "date and time after the next day" may be, for example, a next business day. That is, the "date and time after the next day" may be a day in which the second person in charge works except for a national holiday and a day off.

In a case where the first work by the first person in charge is not completed and a work in process of the first person in charge is stored in the storage location, the storage location control module 144 may determine the storage location in accordance with the work environment of the first person in charge at the date and time when the first person in charge resumes the first work next. Not only a case where one work in the workflow is completed but also a case where the one work may be performed in plural times, and in this case, the work environment is changed.

Regarding whether the result is the work in process, it may be determined whether the workflow control module 142 has completed the work. In a case where the work is not completed, the result is the work in process, and in a case where the work is completed, the result is the work result (more accurately, a final work result in the work). In addition, regarding whether the result is the work in process, in a case where an operation is to delete the work result (work result of the previous work) from the storage location (the storage location in which the work result of the previous work is stored when the work is started) if the work is completed, in a case where the work result is not deleted from the storage location, the result may be treated as the work in process. In a case where the work result is deleted from the storage location, the result may be treated as the work result.

In a case where the work environment of the first person in charge in the case of storing the work in process in the storage location is outside the organization to which the first person in charge belongs, and the work environment of the first person in charge at the date and time when the first person in charge resumes the first work next is in the organization to which the first person in charge belongs, the storage location control module 144 may set the storage location used outside the organization. In the above-described processing, in a case where the work environment of the first person in charge is in the organization to which the first person in charge belongs, the storage location used in the organization is generally set. However, in many cases, the access from the work environment in the organization to the storage location outside the organization is easier than in a reverse case (that is, a case of accessing the storage location in the organization from the work environment outside the organization). Further, the access from the work environment outside the organization to the storage location in the organization is not easier than a general case (that is, a case of accessing the storage location outside the organization from the work environment outside the organization). Therefore, in the case where the work environment of the first person in charge when storing the work in process in the storage location is outside the organization to which the first person in charge belongs, even when the work environment of the first person in charge at the date and time when the first person in charge resumes the first work next is in the organization, the storage location used outside the organization is set.

Note that the processing is not limited to the work in process, and the same processing may be performed on the work result. That is, in a case where the work environment of the first person in charge in the case of storing the work result in the storage location is outside the organization to which the first person in charge belongs, and the work environment of the second person in charge at the date and time when the second person in charge performs the second work is in the organization to which the second person in charge belongs, the storage location used outside the organization may be set.

After storing the work result in the storage location, the storage location control module 144 may confirm the work environment of the second person in charge, and store the work result in the storage location according to the work environment after the change, in a case where there is a change in the work environment. This is because the work environment may suddenly change, and this corresponds to the change. As an opportunity of "confirming the work environment of the second person in charge", there may be, for example, polling processing of an inquiry to a schedule management system, a notification from the schedule management system, an operation indicating that the work environment by the second person in charge is changed, and the like. Then, in the case where there is a change in the work environment, the stored work result is moved in accordance with the changed work environment.

In a case where the second person in charge is plural persons, the storage location control module 144 may determine the storage location in accordance with the work environments of the plural second persons in charge in accordance with a predetermined rule.

As the rule, "in the case where the work environment of the second person in charge includes outside the organization, the storage location is determined as the storage location outside the organization".

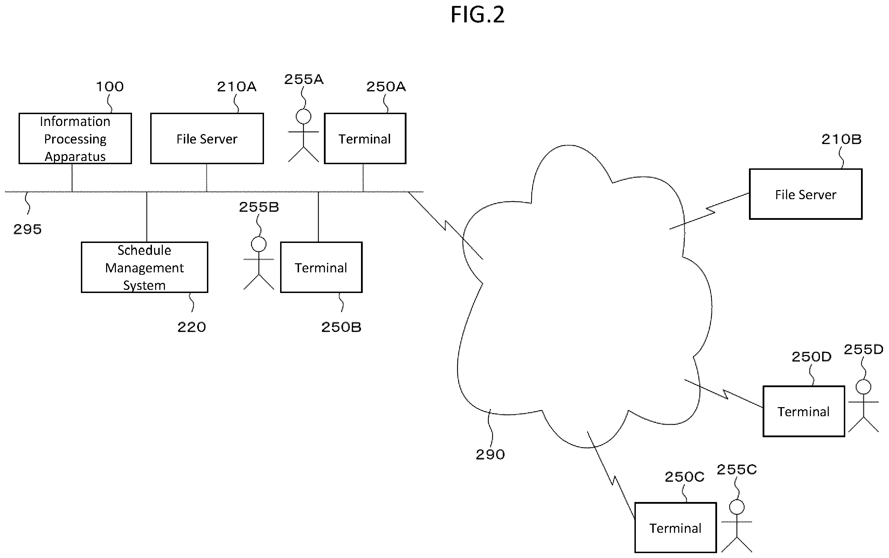

Fig. 2 is an explanatory diagram illustrating a system configuration example using the present exemplary embodiment.

A user 255 (user 255A or the like) has a terminal 250 (terminal 250A or the like).

The information processing apparatus 100, a file server 210A, a schedule management system 220, the terminal 250A, and a terminal 250B are connected to each other via a communication line 295. For example, these devices are connected to the communication line 295 in one company. The communication line 295 is, for example, an intranet. The user 255A and a user 255B are employees of the company and are persons in charge of the workflow. Therefore, in this case, the work environments of the user 255A and the user 255B are in the same organization.

Further, a file server 210B, a terminal 250C, a terminal 250D are connected to each other via a communication line 290. The communication line 290 is, for example, the Internet. For example, a user 255C and a user 255D are employees of the same company as described above, and are persons in charge of the workflow. Therefore, in this example, the work environments of the user 255C and the user 255D is outside the organization.

Naturally, the communication line 295 and the communication line 290 are also connected, and for example, the terminal 250A can access the file server 210B, and the terminal 250C can access the file server 210A. However, there is a firewall between the communication line 295 and the communication line 290, and for security protection, the terminal 250C cannot access the file server 210A or it is more difficult (many procedures, strict security policy, or the like) for the terminal 250C to access the file server 210A than for the terminal 250A to access the file server 210A.

The persons in charge of performing the work of the workflow are divided into the person in the organization (for example, the user 255A and the user 255B who go to work in the company) and the person outside the organization (for example, the user 255C and the user 255D who work at home). In this case, for example, in a case where the user 255A who is the first person in charge stores the work result in the file server 210A and the user 255C who is the next second person in charge starts the work, it is necessary to access the file server 210A. As described above, in a case where the user 255C cannot access the file server 210A, the user 255C cannot perform the work. Alternatively, in a case where it is difficult for the user 255C to access the file server 210A, it takes time to access the file server 210A before starting the work of the workflow.

Therefore, in a case where the user 255A who is the first person in charge completes the work, the information processing apparatus 100 according to the present exemplary embodiment does not store the work result in the file server 210A, but stores the work result in the file server 210B in accordance with the work environment (in this case, the work environment outside the organization) of the user 255C who is the second person in charge. As a result, the user 255C can smoothly start the work. That is, the user 255C does not need to access the file server 210A, and can acquire the work result by the user 255A by accessing the file server 210B.

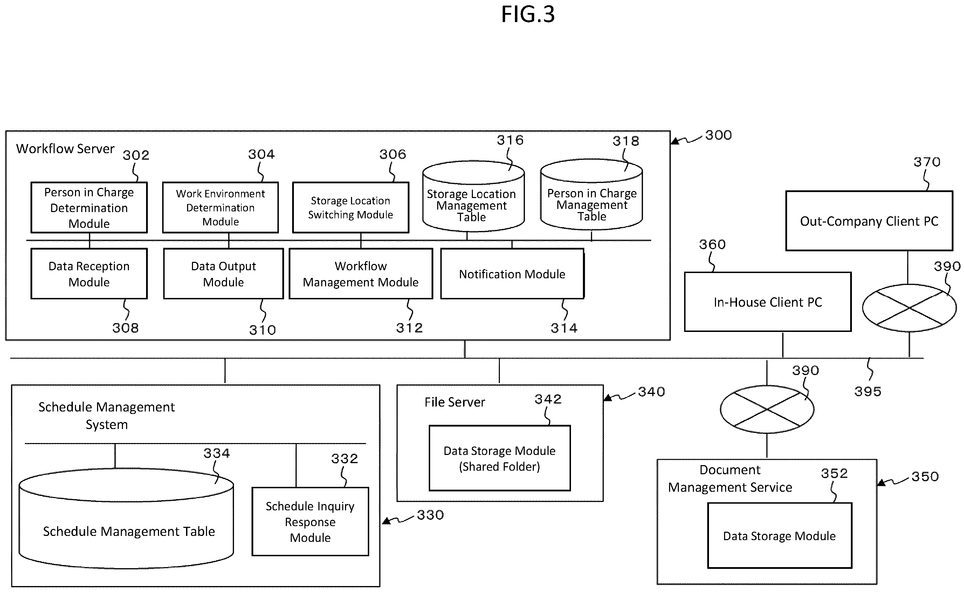

Fig. 3 is a specific module configuration diagram of a configuration example according to the present exemplary embodiment.

A workflow server 300 corresponds to the information processing apparatus 100, a schedule management system 330 corresponds to the schedule management system 220, a file server 340 corresponds to the file server 210A, a document management service 350 corresponds to the file server 210B, an in-house client PC 360 corresponds to the terminal 250A and the terminal 250B, and an out-company client PC 370 corresponds to the terminal 250C and the terminal 250D.

The workflow server 300, the schedule management system 330, the file server 340, and the in-house client PC 360 are connected to each other via an in-house line 395. These devices are connected to a document management service 350 and the out-company client PC 370 via the Internet 390.

As described above, although it is easy for the in-house client PC 360 to access the document management service 350, it is not easy for the out-company client PC 370 to access the file server 340.

Due to an influence of a coronavirus crisis, a frequency of switching between going to work and the remote work is increased as compared with the related art, and all the employees are targeted not only by the specific person in charge. That is, as the persons in charge of the work of the workflow, a person in charge who goes to work to perform the work and a person in charge who performs the work with the remote work are mixed.

In the related art, an output location in a workflow system is the file server 340, which is a shared folder accessible only from the company. With such a configuration, the person in charge (the user of the out-company client PC 370) who performs the work with the remote work cannot access the file server 340 and cannot work in the same manner as in the case where the person in charge is in an in-house environment.

In addition, as an alternative to the file server 340, a method of using the document management service 350 of a cloud that can be connected via the Internet 390 may be considered. However, in the case of the document management service 350 of the cloud, the cost of the service usage fee (not only the cloud but also the usage fee of a virtual private network (VPN)) is higher than in the related art. In addition, in a case of a large capacity file, it takes time to upload or download, and a load is concentrated on a proxy server of the company, which puts a pressure on a bandwidth used by the other communication in the related art, and therefore, simply using the document management service 350 of the cloud is costly, including system modification on a network side, which is difficult to use in reality.

Therefore, in the present exemplary embodiment, a registration location of the work result is switched according to the work environment (the in-house or the out-company, or going to work or the remote) of the person in charge (the person in charge of the next work) that receives the work result in each work of the workflow.

For this purpose, for example, (1) a person in charge determination module 302 performs processing of extracting a person in charge to be processed using data in a person in charge management table 318, (2) a work environment determination module 304 performs processing of extracting the work environment from a schedule management system 330 based on the extracted person in charge, and (3) a storage location switching module 306 performs processing of switching the registration location of the work result corresponding to the work environment using data in a storage location management table 316. Although the registration location of the final work result in each work is switched, a registration location of the work in process (also called the intermediate product) can be similarly switched. A case of storing the work in process is a typical example in a case where the first person in charge and the second person in charge are the same. However, in a case where the final work result is registered, it is not excluded that the first person in charge and the second person in charge are the same.

The workflow server 300 includes the person in charge determination module 302, the work environment determination module 304, the storage location switching module 306, a data reception module 308, a data output module 310, a workflow management module 312, a notification module 314, the storage location management table 316, and the person in charge management table 318.

The person in charge determination module 302, the work environment determination module 304, the storage location switching module 306, the data reception module 308, the data output module 310, the workflow management module 312, the notification module 314, the storage location management table 316 and the person in charge management table 318 are connected to each other.

The person in charge determination module 302 determines the person in charge of each work in the workflow. For example, the person in charge who performs the work at present and the person in charge who performs the next work are determined.

The work environment determination module 304 determines the work environment of the person in charge. In particular, the work environment of the person in charge of performing the next work is determined. For example, the work environment may be extracted from the schedule of the person in charge in the schedule management system 330. Here, as the work environment, specifically, it is determined whether the environment is the in-house environment or the remote environment.

The storage location switching module 306 switches the storage location of the work result (hereinafter, including the work in process).

The data reception module 308 receives data necessary for managing the workflow from another device.

The data output module 310 outputs data necessary for management of the workflow to the other device.

The workflow management module 312 manages a flow of the work in the workflow.

The notification module 314 notifies of which storage location the work result of the previous work is present by urging the work of the workflow.

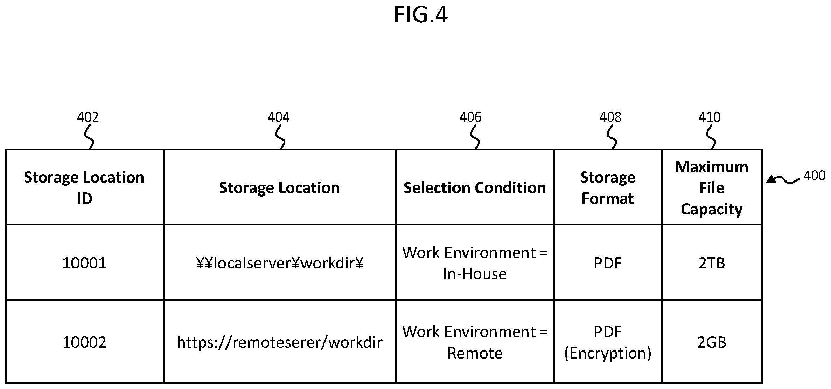

The storage location management table 316 stores data for managing the storage location. For example, the storage location management table 400 is stored. Fig. 4 is an explanatory diagram illustrating a data structure example of the storage location management table 400.

The storage location management table 400 includes a storage location ID field 402, a storage location field 404, a selection condition field 406, a storage format field 408, and a maximum file capacity field 410. In the present exemplary embodiment, the storage location ID field 402 stores information for uniquely identifying the storage location (specifically, storage location ID: IDentification). The storage location field 404 stores information indicating a location of the storage. For example, a directory, a uniform resource locator (URL), or the like is provided. The selection condition field 406 stores a condition when the storage location is selected. In a case where this condition is satisfied, the storage location is selected. The storage format field 408 stores a format at the time of storage in the storage location. Therefore, in a case where data (a document or the like that is a work result) is not in that format, a conversion to the format is automatically performed. The maximum file capacity field 410 stores a maximum file capacity that can be stored in the storage location.

For example, as a first line of the storage location management table 400, a storage location ID: 10001 indicates that the storage location is "¥¥localserver¥workdir¥", the selection condition is "work environment = in-house", the storage format is "PDF", and the maximum file capacity is "2TB". As a second line, a storage location ID: 10002 indicates that the storage location is "https://remoteserver/workdir", the selection condition is "work environment = remote", the storage format is "PDF (encryption)", and the maximum file capacity is "2GB".

That is, in a case where the work environment of the person in charge who performs the next work is in the company (that is, in the case where the in-house client PC 360 is used, and in a schedule management table 600, "go to work" is indicated), the storage location ID: 10001 is used, and the work result of the previous work is converted into PDF and stored. That is, in a case where the work environment of the person in charge who performs the next work is remote (that is, in the case where the out-company client PC 370 is used, and in the schedule management table 600, "at home" is indicated), the storage location ID: 10002 is used, and the work result of the previous work is converted into PDF, encrypted and stored.

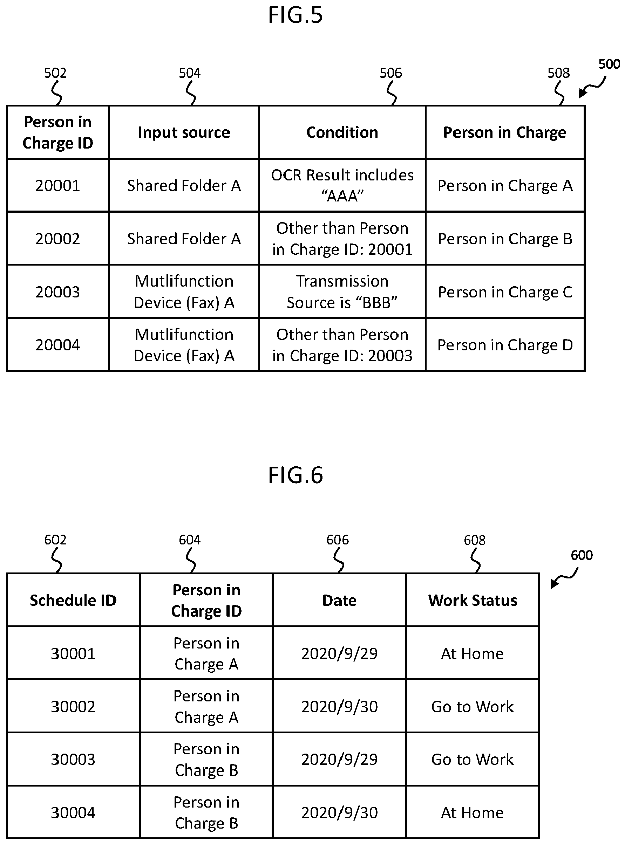

The person-in-charge management table 318 stores data for managing a person in charge in each work in the workflow. For example, a person in charge management table 500 is stored. Fig. 5 is an explanatory diagram illustrating a data structure example of the person-in-charge management table 500.

The person in charge management table 500 includes a person in charge ID field 502, an input source field 504, a condition field 506, and a person in charge field 508. In the present exemplary embodiment, the person in charge ID field 502 stores information for uniquely identifying a person in charge (specifically, a person in charge ID). The input source field 504 stores a target input source. The condition field 506 stores a condition for selecting the person in charge. That is, when the data of the input source satisfies the condition, the person in charge is selected. The person in charge field 508 stores the person in charge.

For example, as a first line of the person-in-charge management table 500, a person in charge ID: 20001 indicates that the input source is a "shared folder A", the condition is "'AAA' is included in an OCR result", and the person in charge is a "person in charge A". As a second line, a person in charge ID: 20002 indicates that the input source is the "shared folder A", the condition is "other than the person in charge ID 20001", and the person in charge is a "person in charge B". As a third line, a person in charge ID: 20003 indicates that the input source is the "multifunction device (FAX) A", the condition is a "transmission source is 'BBB'", and the person in charge is a "person in charge C". As a fourth line, a person in charge ID: 20004 indicates that the input source is the "multifunction device (FAX) A", the condition is "other than the person in charge ID 20003", and the person in charge is a "person in charge D".

That is, the condition indicates assignment of the person in charge by a character string included in a result of the character recognition of the data in the input source, and assignment of the person in charge according to the source number of the received FAX in a case where the input is the FAX data. Noted that the assignment processing of these persons in charge is an example of a general workflow system, and other processing may be used. For example, a predetermined person in charge may be assigned to each work, or a person in charge of the previous work may designate a person in charge of the next work.

The schedule management system 330 includes a schedule inquiry response module 332 and a schedule management table 334. Noted that the schedule management system 330 may be an attendance system that includes a schedule as to whether the user goes to work in the company or with the remote work.

The schedule inquiry response module 332 and the schedule management table 334 are connected.

The schedule inquiry response module 332 receives an inquiry about a schedule of the person in charge from the workflow server 300, and returns schedule data of the person in charge to the workflow server 300.

The schedule management table 334 stores data for managing the schedule of each person in charge. For example, the schedule management table 600 is stored. Fig. 6 is an explanatory diagram illustrating a data structure example of the schedule management table 600.

The schedule management table 600 includes a schedule ID field 602, a person in charge field 604, a date field 606, and a work status field 608. The schedule ID field 602 stores information (specifically, a schedule ID) for uniquely identifying the schedule in the present exemplary embodiment. The person in charge field 604 stores the person in charge. The date field 606 stores a date. The work status field 608 stores a work status of the person in charge on that date. For example, information indicating whether the work status is "go to work" or "at home (corresponding to remote)" is stored.

For example, as a first line of the schedule management table 600, a schedule ID: 30001 indicates that the person in charge is the "person in charge A", the date is "2020/9/29", and the work status of the person in charge A on 2020/9/29 is "at home". As a second line, a schedule ID: 30002 indicates that the person in charge is the "person in charge A", the date is "2020/9/30", and the work status of the person in charge A on 2020/9/30 is "go to work". As a third line, a schedule ID: 30003 indicates that the person in charge is the "person in charge B", the date is "2020/9/29", and the work status of the person in charge B on 2020/9/29 is "go to work". As a fourth line, a schedule ID: 30004 indicates that the person in charge is the "person in charge B", the date is "2020/9/30", and the work status of the person in charge B on 2020/9/30 is "at home".

The file server 340 includes a data storage module (shared folder) 342.

The data storage module (shared folder) 342 stores a work result in each work of the workflow. In particular, in the case where the work environment of the person in charge of the next work is in-house, the work result of the person in charge of the previous work is stored.

The document management service 350 includes a data storage module 352.

The data storage module 352 provides a cloud data storage service. In the present exemplary embodiment, the work result in each work of the workflow is stored. In particular, in the case where the work environment of the person in charge of the next work is out-company, the work result of the person in charge of the previous work is stored.

The in-house client PC 360 is a terminal used when going to work.

The out-company client PC 370 is a terminal used at the time of remote work, and is installed, for example, at the home of the person in charge. Of course, an installation location of the out-company client PC 370 may be may be any location as long as the out-company client PC 370 is not directly connected to the in-house line 395, is not limited to the home, but may be a remote office or the like, and if the out-company client PC 370 is a mobile information communication device, the installation location may be outdoors.

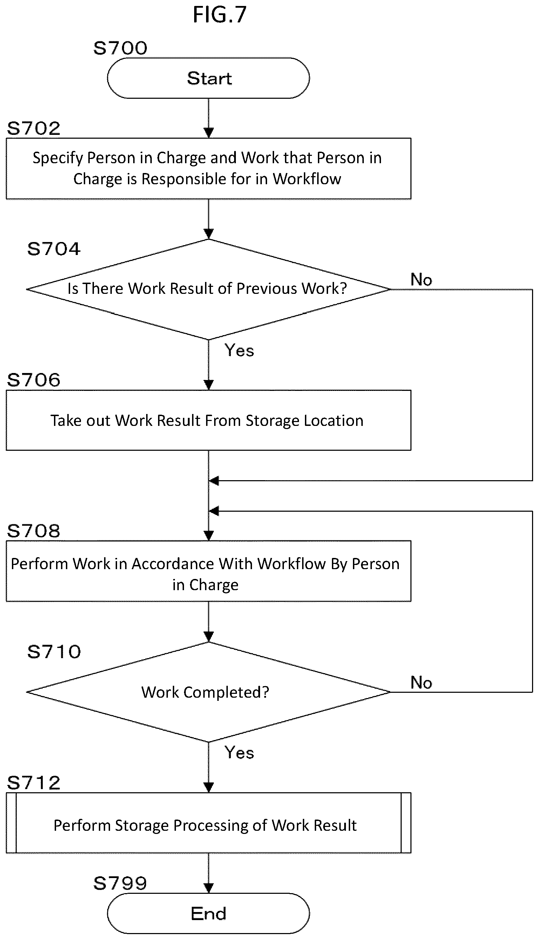

Fig. 7 is a flowchart illustrating a processing example according to the present exemplary embodiment. A description will be given of a processing example showing the flow of a work of a general workflow.

In step S702, the person in charge and the work that a person in charge is responsible for in the workflow are specified.

In step S704, it is determined whether there is the work result of the previous work. In a case where there is the work result of the previous work, the process proceeds to step S706, and in other cases, the process proceeds to step S708.

In step S706, the work result is taken out from the storage location.

In step S708, the work is performed in accordance with the workflow by the person in charge.

In step S710, it is determined whether the work is completed. In a case where the work is completed, the process proceeds to step S712, and in other cases, the process returns to step S708.

The completion of the "work completed?" in step S710 may include interruption and cancellation in addition to the case where the work is completed. For example, the work may not be completed on the day, the work may be interrupted, and the continuation may be performed on the next day, including the interruption in that case. In this case, the person in charge before the interruption of the work and the person in charge after the continuation of the work are the same person.

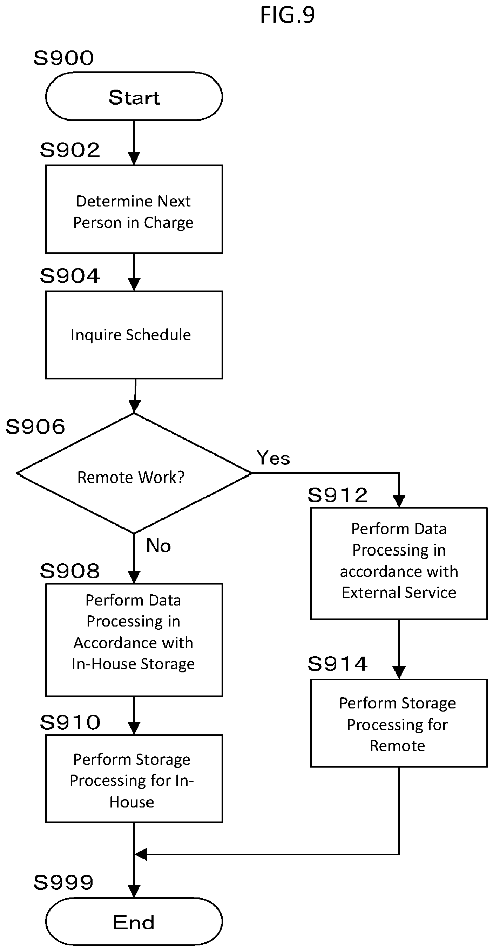

In step S712, storage processing of the work result is performed. The detailed processing of step S712 will be described later with reference to a flowchart illustrated in an example of Fig. 9.

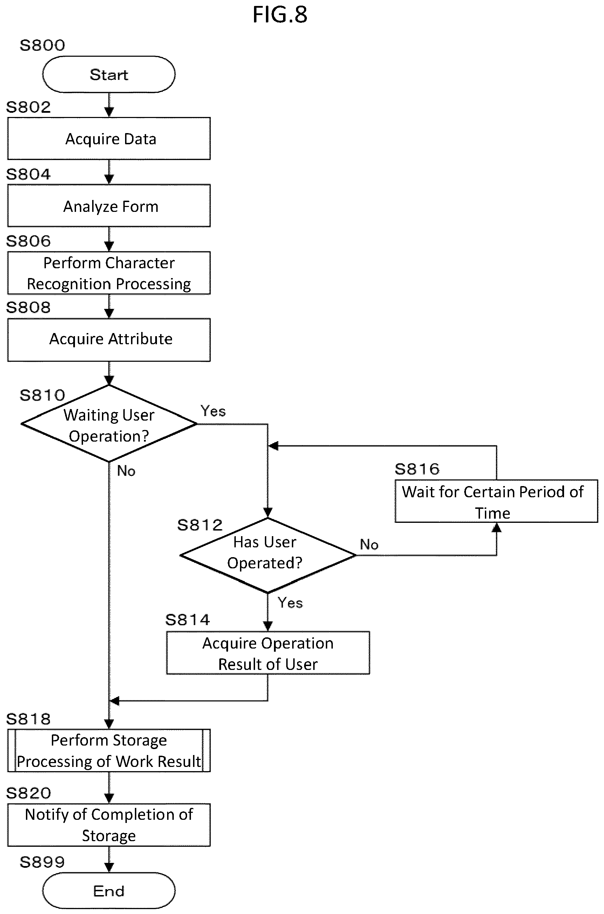

Fig. 8 is a flowchart illustrating a processing example according to the present exemplary embodiment. A processing example illustrating a flow of works of a specific workflow will be described.

In step S802, data is acquired. For example, attribute information (transmission source or the like) of fax data and a fax job accumulated in the multifunction device is acquired. Alternatively, data of a shared folder may be acquired, or the like.

In step S804, a form is analyzed. For example, the image data acquired in step S802 is subjected to form analysis, and a specific area to be used in workflow processing is extracted.

In step S806, character recognition processing is performed. The character recognition processing is performed on the specific area extracted in step S804, and a character string is extracted. Alternatively, as another example, processing of reading a barcode or the like may be used.

In step S808, an attribute is acquired. For example, the attribute information of the fax job is analyzed, and a specific attribute value (transmission source or the like) to be used in the workflow processing is acquired.

In step S810, it is determined whether the user is waiting for an operation. In a case of waiting for the operation of the user, the process proceeds to step S812, and in other cases, the process proceeds to step S818. For example, in a case where a designation for waiting for an operation of the user is performed, a waiting state of the operation of the user is entered. For example, there is a case where the user visually observes an analysis result up to here to determine a distribution location folder, and the like.

In step S812, it is determined whether the user has already operated. In a case where the operation has been completed, the process proceeds to step S814, and in other cases, the process proceeds to step S816. That is, it is confirmed whether the operation by the user is performed.

In step S814, an operation result of the user is acquired. The operation result by the user is acquired. It is assumed that the user inputs some attribute values.

In step S816, the process waits for a certain period of time, and then the process returns to step S812. That is, the user stands by for a certain period of time since the user is in a non-operated state.

In step S818, the storage processing of the work result is performed. The detailed processing of step S818 will be described later with reference to a flowchart shown in an example of Fig. 9.

In step S820, the person in charge of the next work is notified of completion of the storage. Specifically, the person in charge of the next work is notified by email that the storage processing of the work result has been completed in the previous work and the storage location thereof.

Fig. 9 is a flowchart illustrating a processing example according to the present exemplary embodiment. The detailed processing example of step S712 in the flowchart illustrated in the example of Fig. 7 and step S818 in the flowchart illustrated in the example of Fig. 8 is illustrated.

In step S902, the next person in charge is determined. Specifically, as in the person in charge management table 500, a predetermined condition is associated with a person in charge, and when the condition is satisfied, the person in charge is determined. That is, the person in charge determination module 302 determines the next person in charge based on input data and the person in charge management table 500. The next person in charge may be the same person as the previous person in charge.

In step S904, the schedule is inquired. Specifically, the schedule management system 330 is inquired about the schedule of the next person in charge determined in step S902. For example, a line indicating the schedule of the person in charge in the schedule management table 600 is received. That is, the work environment determination module 304 makes an inquiry to the schedule management system 330 based on the person in charge determined in step S902, and acquires the work environment of the person in charge.

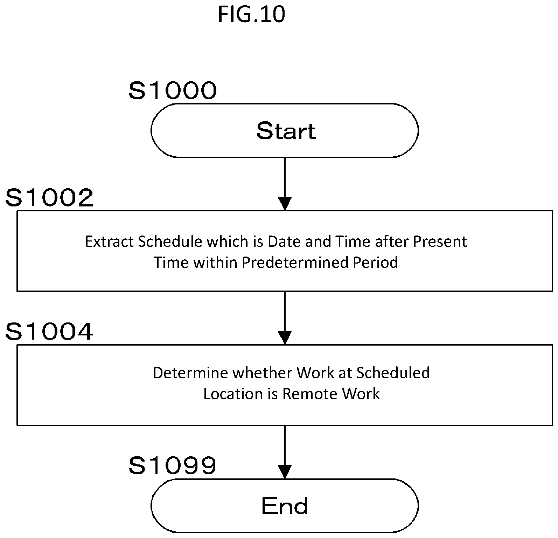

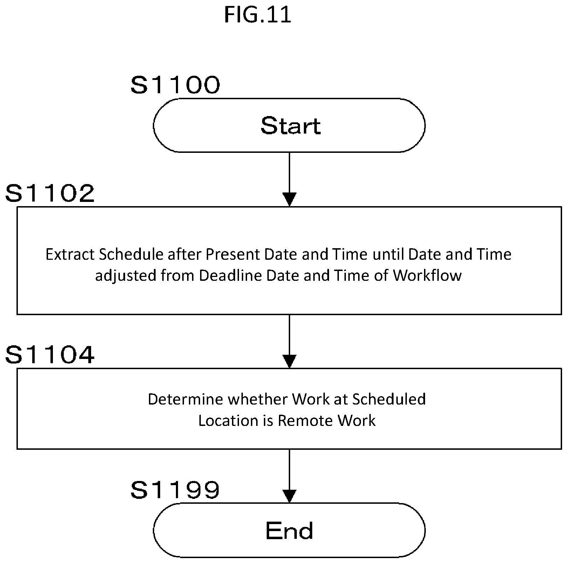

In step S906, it is determined whether a remote work is performed. In the case of the remote work, the process proceeds to step S912, and in other cases, the process proceeds to step S908. That is, the processing branches depending on whether the work environment acquired in step S904 is the remote work. The detailed processing of step S906 will be described later with reference to a flowchart illustrated in an example of Fig. 10 or 11.

In step S908, data processing in accordance with in-house storage is performed. Specifically, the work result is processed using the storage location management table 400. That is, a storage format of the storage format field 408 under a condition of "work environment = in-house" in the selection condition field 406 of the storage location management table 400 is acquired, and data conversion processing is performed as necessary. In addition, in a case where the maximum file capacity of the maximum file capacity field 410 is exceeded, division processing is also performed.

In step S910, storage processing for in-house is performed. Specifically, the processed work result is stored in the data storage module (shared folder) 342. That is, a storage location under a condition of "work environment = in-house" in the selection condition field 406 of the storage location management table 400 is acquired, and the processed work result is distributed to the storage location.

In step S912, data processing in accordance with an external service is performed. Specifically, the work result is processed using the storage location management table 400. That is, a storage format of the storage format field 408 under a condition of "work environment = remote" in the selection condition field 406 of the storage location management table 400 is acquired, and data conversion processing is performed as necessary. In addition, in the case where the maximum file capacity of the maximum file capacity field 410 is exceeded, the division processing is also performed.

In step S914, storage processing for the remote is performed. Specifically, the processed work result is stored in the document management service 350. That is, the storage location under the condition of "work environment = remote" in the selection condition field 406 of the storage location management table 400 is acquired, and the processed work result is distributed to the storage location.

Fig. 10 is a flowchart illustrating a processing example according to the present exemplary embodiment. The processing example of step S906 in the flowchart shown in the example of Fig. 9 is shown.

In step S 1002, a schedule within a predetermined period, which is a date and time after present time, is extracted. Here, the "present time" is a time point at which the previous work is completed (or a time point after the completion). The predetermined period includes one day or the like.

In step S 1004, it is determined whether the work at the scheduled location is the remote work. Specifically, the determination is made in the work status field 608 of the schedule management table 600.

As the processing example of step S1002, in a case where the "present (time at which the work result is stored in the storage location)" has exceeded predetermined time (for example, 5 o'clock in the evening), a date and time after the next day may be extracted from the schedule of the second person in charge as a date and time at which the second person in charge performs the second work.

Fig. 11 is a flowchart illustrating a processing example according to the present exemplary embodiment. The processing example of step S906 in the flowchart shown in the example of Fig. 9 is shown.

In step S 1102, a schedule after present date and time until date and time adjusted from the deadline date and time of the workflow is extracted. Here, the "present date and time" is the time point at which the previous work is completed (or the time point after the completion). The "date and time adjusted from the deadline date and time of the workflow" is a date and time at which the next work has to be started in order to achieve a predetermined deadline (also referred to as a final deadline) of the workflow. For example, the number of remaining days until the final deadline may be divided by the number of remaining works to be calculated, and the date and time at which the next work should be started may be determined. In addition, a work amount of all the remaining works is calculated, and a ratio (%) of the work amount of the next work is calculated. Further, the number of days remaining until the final deadline may be multiplied by the ratio to calculate, and the date and time at which the next work should be started may be determined.

In step S 1104, it is determined whether the work at the scheduled location is the remote work. Specifically, the determination is made in the work status field 608 of the schedule management table 600.

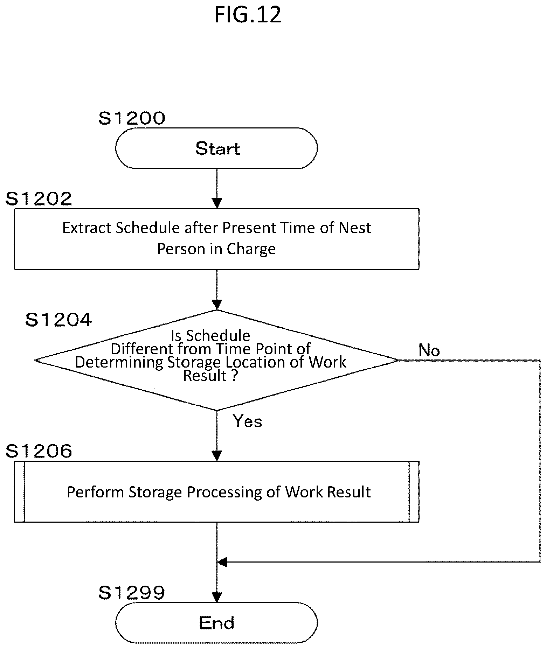

Fig. 12 is a flowchart illustrating a processing example according to the present exemplary embodiment. The processing example in a case where the work environment of the second person in charge is confirmed after the work result is stored in the storage location, and there is a change in the work environment is shown. Here, "when there is a change in the work environment" refers to a case where the work environment in which the schedule of the second person in charge is confirmed at the time point at which the work result is already stored is different from the work environment in which the schedule of the second person in charge is confirmed at a present time point.

In step S 1202, a schedule after the present time of the next person in charge is extracted.

In step S 1204, it is determined whether the schedule is different from a time point at which the storage location of the work result is determined. In a case of a different schedule, the process proceeds to step S 1206, and in other cases, the process ends (step S 1299).

In step S 1206, storage processing of the work result is performed. The detailed processing of step S1206 is described above with reference to the flowchart shown in the example of Fig. 9.

Noted that the processing of step S1204 may be the "the work environment is in-house at the time point at which the storage location of the work result is determined, but is out-company at the present time point. That is, only when the work environment is changed from the inside of the organization to the outside of the organization, the storage location may be changed to the storage location outside the organization. Since it is easy to access the storage location outside the organization from inside of the organization, in a case where the work environment is changed from the outside of the organization to the inside of the organization, change processing of the storage location is not required.

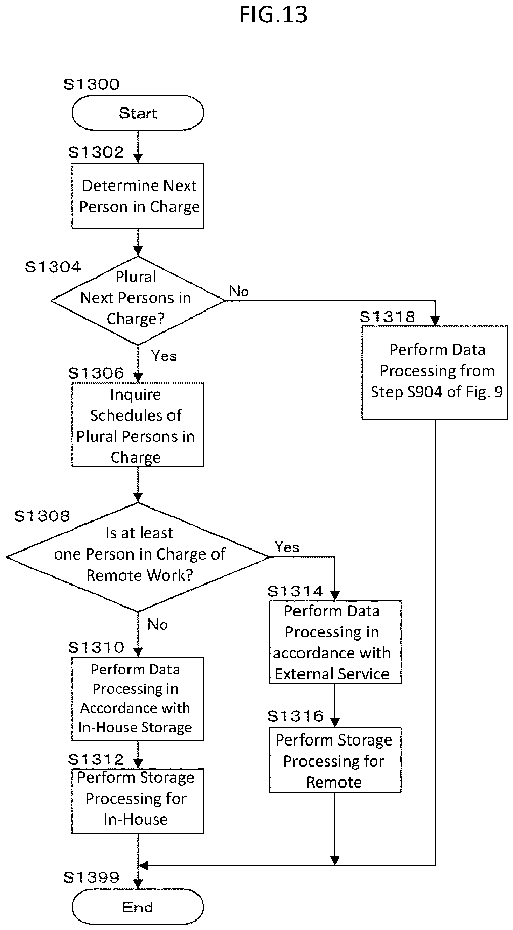

Fig. 13 is a flowchart illustrating a processing example according to the present exemplary embodiment. The processing example of determining the storage location in accordance with the work environments of plural second persons in charge according to a predetermined rule, in a case where there are the plural second persons in charge, is shown.

In step S 1302, the next person in charge is determined.

In step S 1304, it is determined whether there are plural next persons in charge. In a case of the plural persons, the process proceeds to step S 1306, and in other cases, the process proceeds to step S1318.

In step S 1306, schedules of the plural persons in charge are inquired.

In step S 1308, it is determined whether at least one person is in charge of the remote work. In a case where it is determined that at least one person is in charge of the remote work, the process proceeds to step S1314, and in other cases, the process proceeds to step S1310.

In step S1310, data processing in accordance with the in-house storage is performed.

In step S 1312, storage processing for in-house is performed.

In step S1314, data processing in accordance with the external service is performed. In step S1316, the storage processing for the remote is performed.

In step S1318, the processing in step S904 and processing in subsequent steps in the flowchart illustrated in the example of Fig. 9 are performed.

The processing of step S 1308 may be "are there more persons in charge of the remote work? (an example of "are there more persons in charge whose work environments are outside the organization than the persons in charge whose work environments are in the organization")", may be "is a key person in charge remote work? (an example of "is the work environment of the key person in charge outside the organization?")", or the like. The "key person in charge" may be, for example, a manager, a predetermined person, or a person who has performed the work most often based on past achievements.

In addition, in a case where different work environments are mixed, plural storage locations (that is, a storage location in the organization and a storage location outside the organization) may be set.

In the exemplary embodiments described above, the term "processor" refers to hardware in a broad sense. Examples of the processor include general processors (for example, CPU: Central Processing Unit) and dedicated processors (for example, GPU: Graphics Processing Unit, ASIC: Application Specific Integrated Circuit, FPGA: Field Programmable Gate Array, and programmable logic device).

In the exemplary embodiments described above, the term "processor" is broad enough to encompass one processor or plural processors in collaboration that are located physically apart from each other but may work cooperatively. The order of operations of the processor is not limited to one described in the exemplary embodiments above, and may be changed as appropriate.

The program described above may be provided by being stored in a recording medium, or may be provided by a communication unit. In this case, for example, the above-described program may be regarded as an invention of a "computer-readable recording medium storing a program ".

The "computer-readable recording medium storing a program" refers to a computer-readable recording medium in which a program is recorded, which is used for program installation, execution, program distribution, or the like.

The recording medium includes, for example, a digital versatile disc (DVD) such as a "DVD-R, DVD-RW, DVD-RAM, or the like" that is a standard established by the DVD Forum, "DVD+R, DVD+RW, or the like" that is a standard established by DVD+RW, a compact disk (CD) including read-only memory (CD-ROM), CD recordable (CD-R), CD rewritable (CD-RW), or the like, and a Blu-ray (registered trademark) disc, a magneto-optical disk (MO), a flexible disk (FD), a magnetic tape, a hard disk, a read-only memory (ROM), an electrically erasable programmable read-only memory (EEPROM (registered trademark)), a flash memory, a random access memory (RAM), a secure digital (SD) memory card, or the like.

The whole or a part of the program may be recorded in the recording medium and stored, distributed, or the like. In addition, the program may be transmitted by communication, for example, by using a transmission medium such as a wired network or a wireless communication network used for a local area network (LAN), a metropolitan area network (MAN), a wide area network (WAN), the Internet, an intranet, extranet, or the like, or a combination thereof, or may be carried on a carrier wave.

Further, the program may be a part or the whole of another program, or may be recorded on a recording medium together with a separate program. In addition, the program may be divided and recorded on plural recording media. In addition, the program may be recorded in any mode as long as the program can be restored by compression, encryption, or the like.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. An information processing apparatus comprising:
a processor configured to,
when storing a work result of a first person in charge that is in charge of a first work in a workflow in a storage location, determine the storage location in accordance with a work environment of a second person in charge that is in charge of a second work following the first work in the workflow.

2. The information processing apparatus according to claim 1,
wherein the processor is configured to,
perform processing the work result to be stored in accordance with the storage location.

3. The information processing apparatus according to claim 2,
wherein the processor is configured to,
in a case where the storage location is a storage location outside an organization to which the second person in charge belongs, perform processing the work result of the second person in charge in accordance with the storage location, a capacity of the storage location, or a capacity of the work result.

4. The information processing apparatus according to claim 1,
wherein the processor is configured to:
acquire a schedule of the second person in charge;
extract a work environment at a date and time at which the second person in charge performs the second work; and
determine the storage location in accordance with the extracted work environment.

5. The information processing apparatus according to claim 4,
wherein the processor is configured to,
in a case where time for storing the work result of the first person in charge in the storage location has exceeded predetermined time, extract a date and time after a next day of the predetermined time from the schedule of the second person in charge as the date and time at which the second person in charge performs the second work.

6. The information processing apparatus according to claim 1,
wherein the processor is configured to,
in a case where the first work is not completed and a work in process of the first person in charge is stored in the storage location, determine the storage location in accordance with a work environment of the first person in charge at a date and time at which the first person in charge resumes the first work next.

7. The information processing apparatus according to claim 6,
wherein the processor is configured to,
in a case where a work environment of the first person in charge when the work in process is stored in the storage location is outside an organization to which the first person in charge belongs and a work environment of the first person in charge at the date and time at which the first person in charge resumes the first work next is in the organization of the first person in charge, set the storage location as a storage location used outside the organization.

8. The information processing apparatus according to claim 1,
wherein the processor is configured to,
after the work result is stored in the storage location, confirm the work environment of the second person in charge; and in a case where there is a change in the work environment, store the work result in a storage location in accordance with a changed work environment.

9. The information processing apparatus according to claim 1,
wherein the processor is configured to,
in a case where a plurality of second persons are in charge of the second work, determine the storage location in accordance with the work environments of the plurality of the second persons in charge according to a predetermined rule.

10. The information processing apparatus according to claim 9,
wherein the processor is configured to,
in a case where the work environments of the second persons in charge include outside of an organization of the first person in charge, determine the storage location as a storage location outside the organization as the rule.

11. An information processing program that causes a processor of a computer including a processor to execute a process comprising:
when storing a work result of a first person in charge that is in charge of a first work in a workflow in a storage location, determining the storage location in accordance with a work environment of a second person in charge that is in charge of a second work following the first work in the workflow.

12. A method for information processing comprising:
when storing a work result of a first person in charge that is in charge of a first work in a workflow in a storage location, determining the storage location in accordance with a work environment of a second person in charge that is in charge of a second work following the first work in the workflow.
